# EUROPEAN PATENT APPLICATION

(11) **EP 2 055 259 A1**
(43) Date of publication of application: **06.05.2009**
(21) Application number: 07792939.6
(22) Date of filing: 23.08.2007
(51) Int. Cl.: A61C 13/083, A61C 5/08

(54) **DENTAL REPAIR MATERIAL, METHOD OF PRODUCING THE SAME AND PORCELAIN PASTE FOR DENTAL REPAIR MATERIAL**

(30) Priority: 25.08.2006 JP 2006229819
(71) Applicant: National University Corporation Tokyo Medical and Dental University, Tokyo 113-8510 (JP)
(72) Inventor: TAGAMI, Junji, Tokyo 113-8510 (JP); IKEDA, Masaomi, Tokyo 113-8510 (JP); NIKAIDO, Toru, Tokyo 113-8510 (JP)
(74) Representative: Graf von Stosch, Andreas
(86) International application number: PCT/JP2007/066392
(87) International publication number: WO 2008/023775

(57) **Abstract**

Provided is a dental restoration having improved conformity and bonding to a foundation. A method for producing such a dental restoration and a porcelain paste for the dental restoration are also provided.

The dental restoration includes a ceramic framework and a porcelain layer deposited at least on the inner surface of the ceramic framework for being bonded by a dental adhesive to the outer surface of an abutment tooth in the mouth. In one preferred embodiment, the ceramic framework is formed of a zirconium oxide ceramic. In another preferred embodiment, the inner surface of the porcelain layer is silane-coupling-treated.

## Description

### Technical Field

The present invention relates to dental restorations and methods for producing dental restorations, as well as to dental pastes for dental restorations. In particular, the present invention relates to a dental restoration that includes a ceramic framework, a porcelain layer deposited on the outer surface of the ceramic framework, and a porcelain layer deposited on the inner surface of the ceramic framework and bonded by a dental adhesive to the outer surface of a foundation in the mouth. The present invention further relates to a method for producing such a dental restoration, as well as to a porcelain paste for such a dental restoration.

### Background Art

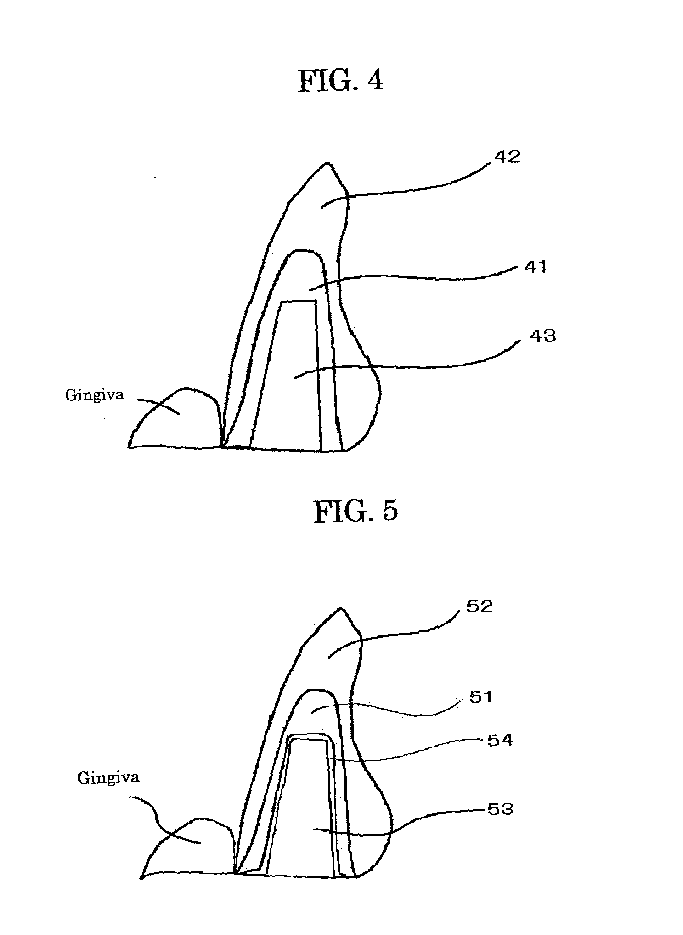

Damaged or lost teeth are restored by bonding a dental restoration (such as inlays, crowns and bridges) to an abutment tooth (foundation) using a dental adhesive. Such a dental restoration is fabricated outside the mouth by forming a lining (framework) from a dental model and baking a porcelain onto the lining. For example, a porcelain 42 is baked onto a lining 41 as shown in Fig. 4. Traditionally, dental metals have been used to form the lining 41 because of their high conformity to foundation 43 and reliability in strength. The recent trend toward white, so-called tooth crown color, natural tooth-colored linings, together with concerns about gum discoloration caused by metal ions that dissolve over time and metal allergies, has led to increasing use of all-ceramic dental restorations, such as the one shown in Fig. 5, that include a metal-free lining 51 and a porcelain 52 baked onto the lining 51 (See, for example, Patent Literature 1).

One drawback of the all-ceramic dental restoration having the metal-free lining 51 (Fig. 5) is its higher susceptibility to cracking than the dental restoration having the metallic lining 41 (Fig. 4). This has led to the need for the development of high-strength all-ceramic dental restorations that can withstand strong occlusal force of the mouth. As a result of extensive studies, dental restorations have been developed in which lining 51 is formed of a high-strength aluminum oxide ceramic fabricated by a special technique (such as PROCERA system available from Nobel Biocare) or of a high-strength zirconium oxide ceramic that employs a special mechanism to minimize the growth of cracking that may otherwise lead to tooth fracture. These dental restorations are increasingly used in clinical applications, primarily in Europe and in the United States. The aluminum oxide ceramics and zirconium oxide ceramics are white in color and are less susceptible to cracking. Moreover, the lining formed of aluminum oxide ceramic or zirconium oxide ceramic can be fabricated by scanning a dental model on a dental CAD/CAM system.

A dental CAD/CAM system employs a numerically controlled (NC) machine tool that can machine a desired finished part according to CAD data. Different types of dental CAD/CAM system exist, including a screen-manipulated CAD type, a copy milling type, an automated type and a network type.

Although the dental restorations in which lining 51 is formed of aluminum oxide ceramic are currently predominant, zirconium oxide ceramics are expected to be increasingly used in the lining 51 because they are chemically more stable and undergo less deterioration over time than zirconium oxide ceramics. For example, a zirconium oxide ceramic product CERCON base (manufactured by Dentsply Sankin) was approved for clinical use by the governor of Tochigi prefecture, Japan, on October 21, 2002. Once the term of this approval is expired, the product is expected to obtain approval from the Minister of Health, Labour and Welfare of Japan.

However, zirconium oxide ceramics are difficult to work and, thus, it is often difficult to achieve desired close conformity to foundation 53, resulting in the formation of a gap 54. Specifically, the required accuracy of the conformity of the lining 51 to the foundation 53 is in the order of 10 to 20µm, whereas the actual accuracy of the zirconium oxide ceramic lining 51 achievable by the dental CAD/CAM technology is in the order of 50 to 60µm or greater.

In addition, the bonding of the lining 51 to the foundation 53 involves a dental adhesive that exhibits strong bonding to metals and aluminum oxide ceramics, but not to the chemically stable zirconium oxide ceramics. Thus, the bonding strength between the zirconium oxide ceramic lining 51 and the foundation 53 is low at the moment.
Patent Literature 1 Japanese Patent Application Laid-Open No. 2001-149385

### Disclosure of the Invention

The present invention has been devised in view of the above-described state of the art and is intended to address the foregoing problems associated with prior art by achieving the following objectives. Specifically, it is an objective of the present invention to provide a dental restoration that has improved conformity and strong bonding to a foundation. It is another objective of the present invention to provide a porcelain paste for the dental restoration.

In the course of studies to find a solution to the foregoing problems, the present inventor has found that the bonding strength between the zirconium oxide ceramic lining 51 and the foundation 53, as well as the accuracy of the conformity of the lining 51 to the foundation 53, can be improved by depositing a porcelain layer on the inner surface of the zirconium oxide ceramic framework by baking.

Conventional approaches to improve the bonding strength between zirconium oxide ceramic lining 51 and foundation 53 focus primarily on the development of adhesives suitable for use with zirconium oxide ceramics.
One example is RESICEM, a resin cement manufactured by Shofu, which is used in combination with AZ primer, a phosphonic acid-containing primer specifically designed for high-strength ceramics. Other approaches are directed to treating the inner surface of frameworks. One such technique involves blasting the inner surface of a framework with silica-coated alumina particles to form a layer (silicate layer) that can react with a silane-coupling agent on the inner surface, thus improving the bonding strength (ROCATEC™ system available from 3M™ ESPE™).

However, none of these approaches employs the deposition (by baking) of a porcelain layer to cover most or all of the inner surface of a zirconium oxide ceramic framework. The idea, conceived by the present inventor, is indeed a unique one.

More specifically, the above-described problems are solved by the following aspects of the present invention:
(1) A dental restoration including a high-strength ceramic framework and a porcelain layer deposited at least on the inner surface of the ceramic framework for being bonded by a dental adhesive to the outer surface of an abutment tooth in the mouth.
   According to (1) above, the porcelain layer deposited on the inner surface of the ceramic framework ensures high conformity and strong bonding of the dental restoration to the abutment tooth.
(2) The dental restoration according to (1) above, wherein the high-strength ceramic framework is formed of a zirconium oxide ceramic.
(3) The dental restoration according to (1) or (2) above, wherein the porcelain layer is formed of a material that can be baked onto the ceramic framework.
(4) The dental restoration according to any of (1) to (3) above, wherein the porcelain layer is formed of an inorganic oxide.
(5) The dental restoration according to any of (1) to (4) above, wherein the porcelain layer includes at least one of SiO₂, Al₂O₃, ZrO₂, TiO₂ and SnO₂.
(6) The dental restoration according to any of (1) to (5) above, wherein the porcelain layer is formed primarily of aluminosilicate glass.
(7) The dental restoration according to any of (1) to (6) above, wherein the bonding surface of the porcelain layer to be bonded to the dental adhesive is silane-coupling-treated.
(8) The dental restoration according to any of (1) to (7) above, wherein the porcelain layer is adapted to be bonded to the abutment tooth by the dental adhesive at a bonding strength of 15MPa or higher.
(9) The dental restoration according to any of (1) to (8) above, further including another porcelain layer deposited on the outer surface of the ceramic framework.
(10) A method for producing a dental restoration for being bonded by a dental adhesive to the outer surface of an abutment tooth in the mouth, the method comprising forming a ceramic framework having an inner surface conforming to the abutment tooth, and applying and baking a porcelain paste onto the inner surface of the ceramic framework.
   According to (10) above, the ceramic framework formed in the forming step has an inner surface that conforms to the abutment tooth. In the baking step, the porcelain paste applied to the inner surface of the ceramic framework is baked onto the inner surface. The resulting porcelain layer deposited on the inner surface of the ceramic framework provides the dental restoration with high conformity and strong bonding to the abutment tooth in the mouth.
(11) The method according to (10) above, further including silane-coupling-treating the bonding surface of the porcelain layer to be bonded to the dental adhesive.
   According to (11) above, the inner surface of the porcelain layer that has been silane-coupling-treated in the silane-coupling-treating step provides the dental restoration with strong bonding to the abutment tooth.
(12) The method according to (10) or (11) above, wherein a fire-resistant model is inserted into the inner surface of the porcelain paste during the baking step subsequent to the application of the porcelain paste.
   According to (12) above, the shape of the fire-resistant model that has been inserted into the inner surface of the porcelain paste during the baking step subsequent to the application of the porcelain paste is transferred to the porcelain layer upon contact of the fire-resistant model with the porcelain layer. This improves the conformity of the dental restoration to the abutment tooth.
(13) The method according to any of (10) to (12) above, further including applying and baking a porcelain paste onto the outer surface of the ceramic framework.
(14) The method according to (13) above, wherein the particles forming the material of the porcelain paste to be applied and baked onto the inner surface of the ceramic framework have smaller particle size than the particles forming the material of the porcelain paste to be applied and baked onto the outer surface of the ceramic framework.
(15) The method according to (13) or (14) above, wherein the porcelain paste to be applied and baked onto the inner surface of the ceramic framework has a fluidity comparable to or higher than that of the porcelain paste applied and baked onto the outer surface of the ceramic framework.
(16) A porcelain paste for a dental restoration for being applied to a surface of the dental restoration to deposit a porcelain layer on the surface, the porcelain paste being formed primarily of aluminosilicate glass.
(17) The porcelain paste according to (16) above, wherein the surface to which the porcelain paste is applied includes the inner surface of a ceramic framework.

According to the present invention, there are provided a dental restoration that has improved conformity and bonding to an abutment tooth (foundation) and a method for producing such a dental restoration, as well as a porcelain paste for the dental restoration.

### Brief Description of Drawings

Fig. 1 is a cross-sectional view of one example of a dental restoration of the present invention.
Fig. 2A is an illustrative view of one example of a method for producing dental restoration of the present invention, showing the manner in which a second porcelain paste is applied to the inner surface of an zirconium oxide ceramic framework.
Fig. 2B is an illustrative view of one example of the method for producing dental restoration of the present invention, showing the manner in which a model is inserted into the inner surface of the second porcelain paste.
Fig. 3 is a diagram showing the results of a tensile bonding test performed using Panavia Fluoro Cement and Super-Bond C&B as dental adhesives.
Fig. 4 is a cross-sectional view of one example of conventional dental restoration.
Fig. 5 is a cross-sectional view of another example of conventional dental restoration.

### Best Mode for Carrying Out the Invention

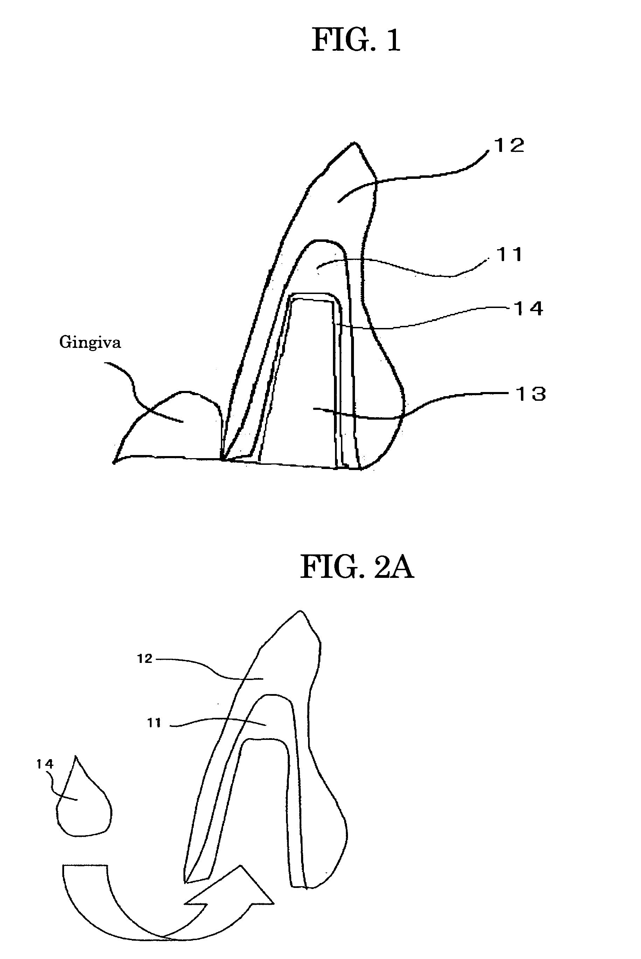

A dental restoration of the present invention includes a ceramic framework having high fracture strength and a porcelain layer deposited at least on the inner surface of the ceramic framework for being bonded by a dental adhesive to the outer surface of a foundation in the mouth. The dental adhesive may further include a porcelain layer deposited on the outer surface of the ceramic framework. For example, the dental restoration as shown in Fig. 1 includes a zirconium oxide ceramic framework 11 that serves as a lining, a porcelain layer 12 deposited on the outer surface of the zirconium oxide ceramic framework 11, a porcelain layer 14 deposited on the inner surface of the zirconium oxide ceramic framework 11 and bonded by an dental adhesive (not shown) to the outer surface of an abutment tooth (foundation) 13 in the mouth, and other layers.

### Ceramic framework

The ceramic framework for use in the present invention has high strength to ensure the durability of the dental restoration. As used herein, the term "high strength" means that the ceramic framework has a 500MPa or higher, more preferably 1,000MPa or higher fracture strength. A representative ceramic framework is a zirconium oxide ceramic framework. The fracture strength can be evaluated according to methods described in literature (Nawa Masahiro, Nakamoto Shoichi, Yamazaki Keiichi et al. Fabrication and Mecbanical Properties of CeO2-Stahilized Tetragonal Zirconia/Al2O3 Nanocomposites. J. of Japan Soc. of Powd. and Powder Metall., 43: 415-420, 1996.; Nawa Masahiro and Niihara Koichi, Development of Tough and Strong Ce-TZP-based Nanocomposite with New Interpenetrated Intragranular Nanostructure. Ceramics Japan, 34(5): 393-396, 1999.) The zirconium oxide ceramic framework 11 also needs to have an appropriate coefficient of thermal expansion to ensure its conformity to the porcelain layer 14 (for the inner surface of the framework), the porcelain layer 12 (for the outer surface of the framework) and the model 22 (when a fire-resistant model is used). For example, the zirconium oxide ceramic framework 11 suitable for use in the present invention is formed of yttria-stabilized tetragonal zirconia polycrystal (Y-TZP) (CERCON base manufactured by Dentsply Sankin) and has a coefficient of thermal expansion (CTE) of 10.5 × 10⁻⁶(/K).

CERCON base is composed of zirconium dioxide, yttrium trioxide and hafnium dioxide.

Preferably, the inner surface of the zirconium oxide ceramic framework 11 is abraded with a waterproof abrasive paper or other abrasive materials or sand-blasted. The abrasion with waterproof abrasive paper or other abrasive materials or sand-blasting provides the surface with an anchoring property and thus improves the bonding strength between the zirconium oxide ceramic framework 11 and the porcelain layer 14. Similarly, in certain embodiments of the dental restoration of the present invention in which the zirconium oxide ceramic framework 11 has the porcelain layer 12 on its outer surface, the outer surface may also be preferably abraded with a waterproof abrasive paper or other abrasive materials or sand-blasted. In clinical practices, the surface is typically prepared by using a diamond or carbide bar prior to sand-blasting. If the inner surface of the zirconium oxide ceramic framework 11 is not abraded or sand-blasted, then the second porcelain layer 14 may come off the inner surface.

The ceramic framework may be an aluminum oxide ceramic framework, which has a lower fracture strength than the zirconium oxide ceramic framework, but has a higher fracture strength than a glass ceramic framework. However, aluminum oxide ceramic frameworks have stronger bonding to adhesives than zirconium oxide ceramic frameworks, so that they are less effective than zirconium oxide ceramic frameworks in improving the bonding strength between the adhesive and the framework through application of the porcelain to the inner surface of the framework. From these points of view, zirconium oxide ceramic frameworks are the most suitable ceramic frameworks for use in the present invention. Porcelain layer (for the inner surface of the framework)

The porcelain layer 14 deposited on the inner surface of the zirconium oxide ceramic framework 11 is positioned between the zirconium oxide ceramic framework and the adhesive to facilitate the bonding between the two. Since the dental adhesive used to bond the lining 51 to the foundation 53 does not exhibit strong bonding to chemically stable zirconium oxide ceramics, the low bonding strength between the zirconium oxide ceramic lining 51 and the foundation 53 has been a significant problem in prior art. However, the provision of the porcelain layer 14 makes it possible to significantly increase the bonding strength. Therefore, the porcelain layer is adapted to be bonded to the abutment teeth by the dental adhesive at a bonding strength of preferably 15MPa or higher and more preferably 20MPa or higher. The bonding strength can be evaluated by conducting a tensile bonding test as described later in the Example section of the present invention. The aesthetic aspect of the porcelain layer 14 is not as important as that required for the porcelain layer 12 since the porcelain layer 14 is not exposed at the outer surface of the crown. Preferably, the porcelain layer 14 is composed primarily of aluminosilicate glass and has a coefficient of thermal expansion (CTE) of 6.0 × 10⁻⁶(/K) to 10.5 × 10⁻⁶(/K).

The porcelain layer 14 may be composed of materials other than aluminosilicate glass that have a thermal expansion or contraction coefficient that allows the porcelain layer 14 to be baked onto the zirconium oxide ceramic framework 11. A typical porcelain is composed of inorganic oxides. For example, a porcelain may contain SiO₂ and Al₂O₃ as major components and ZrO₂, TiO₂ and SnO₂ as additives.

Specific examples of the porcelain layer 14 include, but are not limited to, CERABIEN manufactured by Noritake Kizai Co., Ltd, VINTAGE AL and VINTAGE ZR manufactured by Shofu, NOBEL RONDO manufactured by Nobel Biocare, and CERCON CERAM S manufactured by Dentsply-Sankin.

CERABIEN is composed of Margin porcelain, Shade Base porcelain, Body porcelain, Enamel porcelain, Translucent porcelain, Tooth-colored porcelain and other materials. Its components include potassium aliminosilicate glass and inorganic pigments. The product is provided in the form of a powder.

The physical properties of CERABIEN are shown in Table 1.

**Table 1**

| Type | # of baking | CTE(50-500°C) | Glass Transition Pt. |
|---|---|---|---|
| Shade Base porcelain | 2 | 6.1 × 10⁻⁶/°C | 620°C |
| | 4 | | |
| Body porcelain | 2 | 6.5 ×10⁻⁶/°C | 600°C |
| | 4 | | |
| Enamel porcelain | 2 | 6.5 × 10⁻⁶/°C | 600°C |
| | 4 | | |

VINTAGE AL is composed of Opaque Liner porcelain, Margin porcelain, Body porcelain, Cervical Trans porcelain and Collection porcelain.

Opaque Liner porcelain is composed of aluminosilicate glass, colored glass, glycerol, propylene glycol and other materials. It is provided in the form of a paste.

Margin porcelain, Body porcelain, Cervical Trans porcelain and Collection porcelain are each composed of aluminosilicate glass, colored glass and other materials. They are each provided in the form of a powder.

The physical properties of VINTAGE AL are shown in Table 2.

**Table2**

| Type | # of baking | CTE(25-500°C) | Glass Transition Pt. |
|---|---|---|---|
| Opaque Liner porcelain | 2 | 6.0 × 10⁻⁶/°C | 585°C |
| | 4 | | |
| Margin porcelain | 2 | 7.0 × 10⁻⁶/°C | 610°C |
| | 4 | | |
| Body porcelain | 2 | 6.7×10⁻⁶/°C | 590°C |
| | 4 | | |
| Cervial Trans porcelain | 2 | 6.5 × 10-⁶/°C | 575°C |
| | 4 | | |
| Collection porcelain | 2 | 6.4 × 10⁻⁶/°C | 565°C |
| | 4 | | |

VINTAGE ZR is composed of Opaque Liner porcelain, Margin porcelain, Body porcelain, Cervical Trans porcelain and Collection porcelain.

Opaque Liner porcelain is composed of aluminosilicate glass, colored glass, glycerol, propylene glycol and other materials. It is provided in the form of a paste.

Margin porcelain, Body porcelain, Cervical Trans porcelain and Collection porcelain are each composed of aluminosilicate glass, colored glass and other materials. They are each provided in the form of a powder.

The physical properties of VINTAGE ZR are shown in Table 3.

**Table3**

| Type | # of baking | CTE(25-500°C) | Glass transition pt. |
|---|---|---|---|
| Opaque Liner porcelain | 2 | 9.3 × 10⁻⁶/°C | 620°C |
| | 4 | | |
| Margin porcelain | 2 | 9.3 × 10⁻⁶/°C | 635°C |
| | 4 | | |
| Body porcelain | 2 | 9.4 × 10⁻⁶/°C | 605°C |
| | 4 | | |
| Cervial Trans porcelain | 2 | 9.4 × 10⁻⁶/°C | 595°C |
| | 4 | | |
| Collection porcelain | 2 | 9.4 × 10⁻⁶/°C | 585°C |
| | 4 | | |

The porcelain layer 14 is preferably at least several tens of micrometers in thickness (e.g., 50µm to 60µm) so that it can filled up the gap between the zirconium oxide ceramic framework 11 and the abutment tooth (foundation) 13. Specifically, the thickness of the porcelain layer 14 is determined by the magnitude of the gap between the zirconium oxide ceramic framework 11 and the abutment tooth (foundation) 13, which can vary from one case to another. The gap between the abutment tooth (foundation) 13 and the porcelain layer 14 is filled up by the dental adhesive.

Although the porcelain layer 14 to make up for the gap between the zirconium oxide ceramic framework 11 and the abutment tooth (foundation) 13 is preferably deposited over the entire inner surface of the zirconium oxide ceramic framework 11, it may be deposited over part of the inner surface of the zirconium oxide ceramic framework 11 as long as it covers an area large enough to ensure bonding to the abutment tooth (foundation) 13.

For example, part of the edge of the zirconium oxide ceramic framework 11 that corresponds to the margin (edge) of the abutment tooth (foundation) 13 can be ground using a dental CAD/CAM system and covered with the porcelain layer 14.

Preferably, the inner surface of the porcelain layer 14 is silane-coupling-treated with a silane-coupling agent. In general, the silane-coupling agent used for this purpose is a compound having the R-Si-X₃ structure, where X is an alkoxy group, such as methoxy group (-OCH₃). The alkoxy group is hydrolyzed to a silanol group (Si-OH), which in turn reacts with the silanol groups present in the porcelain layer 14 via hydrogen bonding and dehydration/condensation, forming a stable siloxane bond (Si-O-Si). As a result, a hydrophobic coating is formed on the surface of the porcelain layer 14. R in the above-described structure is an organic functional group that can bind to the dental adhesive.

Specific examples of the silane-coupling agent include y-methacryloxypropyl trimethoxysilane, vinyltrichlorosilane and vinyltriethoxysilane.

### Porcelain layer (for the outer surface of the framework)

Similar to the porcelain layer 14 for the inner surface of the framework, the porcelain layer 12 for the outer surface of the framework is required to have bonding to the zirconium oxide ceramic framework. However, unlike the porcelain layer 14 for the inner surface of the framework, the porcelain layer 12 does not necessarily need to have bonding to the adhesive due to its function. When it is desired to form the outer surface of a crown with the porcelain layer 12, aesthetic aspect can also become an important factor that needs to be considered. Any porcelain commonly used by those skilled in the art may be used in the porcelain layer 12 deposited on the outer surface of the zirconium oxide ceramic framework 11.

### Other layers

Other optional layers may be deposited between the zirconium oxide ceramic framework 11, the porcelain layer 12 and the porcelain layer 14. These layers may be formed of a particular type of porcelain for adjusting color. Among such porcelains are Trans porcelains, Internal Stain porcelains, Stain porcelains, Cervical porcelains, Enamel porcelains and other porcelains. These porcelains have different names depending on the manufacturers. For example, in VINTAGE AL and VINTAGE ZR, each manufactured by Shofu, Margin porcelain, Body porcelain, Cervical porcelain and Collection porcelain are corresponding.

### Dental adhesive

Examples of the dental adhesive used between the porcelain layer 14 for the inner surface of the framework and the foundation 13 include Panavia Fluoro Cement (PF, manufactured by Kuraray Medical), Super-Bond C&B (SB, manufactured by Sun Medical) and other suitable adhesives.

### (Production method of dental restoration)

As shown in Fig. 2A, the dental restoration of the present invention is fabricated by forming the zirconium oxide ceramic framework 11 having an inner surface that conforms to the abutment tooth (foundation) 13 (forming step), and then applying and baking the paste for porcelain layer 14 onto the inner surface of the zirconium oxide ceramic framework 11. The method may further include, either prior or subsequent to the baking step, a step of applying and baking the paste for porcelain layer 12 onto the outer surface of the zirconium oxide ceramic framework 11.

The baking step may consist of either a single or multiple times of baking.

### Forming step

In the forming step, the shape of a dental model is for example scanned by a dental CAD/CAM system, and the zirconium oxide ceramic framework 11 having an inner surface conforming to the abutment tooth (foundation) is fabricated outside the mouth based on the scanned shape of the dental model.

### Step of baking porcelain onto the inner surface of the framework

In the baking step, the paste for the porcelain layer 14 is for example applied and baked onto the inner surface of the zirconium oxide ceramic framework 11. This can be done, for example, as follows.

First, a baking furnace is set to 450°C (Starting temperature). The paste for the porcelain layer 14 is then applied to the inner surface of the zirconium oxide ceramic framework 11 and is left to completely dry. Subsequently, the applied paste is baked (Specifically, the applied paste is maintained at the starting temperature for 120 to 180 seconds (pre-drying), then heated to 840°C at 60°C/min in vacuo (1.3kPa to 8.0kPa), maintained at 840°C for 60 seconds and then cooled to the starting temperature).
Depending on the viscosity of the porcelain paste, the starting temperature and the baking temperature can be preferably adjusted in the ranges of from 400°C to 700°C and from 800°C to 1100°C, respectively.

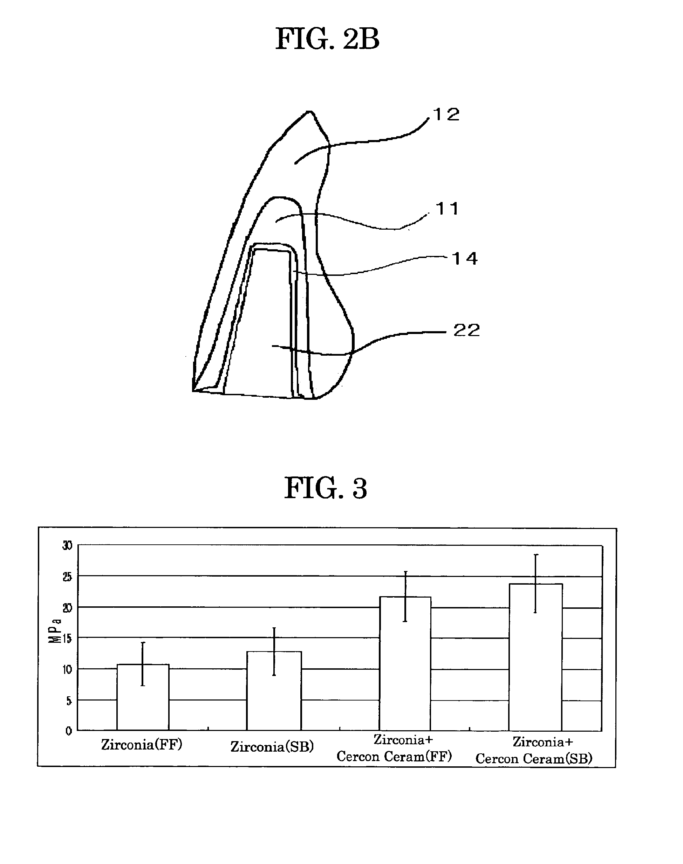

During the baking step, a model 22 (Fig. 2B) may be inserted into the inside of the paste for the porcelain layer 14 that has been applied to the inside of the zirconium oxide ceramic framework 11. The model 22 is pressed against the paste for the porcelain layer 14 to transfer its shape to the paste, after which the model 22 is removed and the paste is baked. Alternatively, a fire-resistant model may be inserted into the inner surface of the porcelain layer 14, in which case the porcelain layer 14 is baked with the fire-resistant model placed against the inner surface and the model is removed after baking. The use of the fire-resistant model 22 can further improve the conformity of the dental restoration to the foundation 13.

A fire-resistant model having a smaller coefficient of thermal expansion will undergo less thermal expansion during baking, resulting in decreased deformation of the porcelain layer 14 caused by the thermal expansion of the fire-resistant model. Thus, by using such a fire-resistant model, the conformity of the dental restoration to the foundation 13 can be further improved.

The aluminosilicate glass used in the paste for the porcelain layer 14 preferably has a smaller particle size than the aluminosilicate glass used in the paste for the porcelain layer 12 for the outer surface of the framework.
In this manner, the paste for the porcelain layer 14 will have a higher fluidity (viscosity) than the paste for the porcelain layer 12, making it easier to adjust the thickness of the porcelain layer 14. In the present invention, the paste for the porcelain layer 14 preferably has a fluidity (viscosity) comparable to or higher than that of the paste for the porcelain layer 12.

It is also preferred to adjust the amount (by wt%) of the solvent in the paste for the porcelain layer 14. In this manner, the thermal contraction of the paste for the porcelain layer 14 during the baking step can be adjusted to minimize the difference between the thermal contraction of the paste for the porcelain layer 14 and that of the zirconium oxide ceramic framework 11 during the baking step. This further improves the conformity of the dental restoration to the foundation 13.

### Step of baking porcelain onto the outer surface of the framework

In the baking step, the paste for the porcelain layer 12 is for example applied and baked onto the outer surface of the zirconium oxide ceramic framework 11. This step can be carried out by using any process commonly used by those skilled in the art. For example, different processes may be used in the baking step depending on the type of material used in the porcelain layer 12, as described below.

### (1) CERABIEN

When the porcelain layer 12 is CERABIEN, the baking step is carried out, for example, as follows.

Once the conformity of the zirconium oxide ceramic framework 11 to the abutment tooth (foundation) 13 has been confirmed, the build-up of Margin porcelain is ground and adjusted. The adjusted zirconium oxide ceramic framework 11 is cleaned by sonication for about 10 minutes. A gypsum-hardening agent is applied around the margin area of the abutment tooth (foundation) 13 and dried. A layer of Magic Separator (manufactured by Noritake Kizai Co., Ltd) is applied. Subsequently, Margin porcelain is kneaded with Magic Former (manufactured by Noritake Kizai Co., Ltd) and baked. To increase the baking strength between the zirconium oxide ceramic framework 11 and porcelain, Shade Base porcelain kneaded with a forming liquid is applied in a thin layer to the surface of the zirconium oxide ceramic framework 11 having Margin porcelain baked onto it. The applied Shade Base porcelain is then baked. Additional Shade Base porcelain is then built up over the entire surface of the zirconium oxide ceramic framework 11 and baked. Body porcelain is applied to form the crown contour and, if necessary, a mixture of Body porcelain and Cervical porcelain is built up on the cervical area. The proximal surface and the labial surface are cut back and the finger-like structure is provided. Enamel porcelain is built up and Translucent porcelain is subsequently built up entirely approximately 10% larger than the desired crown contour to compensate for the contraction caused by baking. Tooth-colored porcelain is baked onto. This is followed by morphological correction and cleaning, and subsequent glaze baking.

### (2) VINTAGE AL, VINTAGE ZR

When the porcelain layer 12 is VINTAGE AL or VINTAGE ZR, the baking step is carried out, for example, as follows.

The zirconium oxide ceramic framework 11 is pre-treated as necessary, for example, by adjusting with a grinder and baking for stabilizing color (Specifically, starting at 650°C, the framework is heated to 1,000°C to 1,050°C in the atmosphere, maintained at the temperature for 5 minutes, and then cooled outside the furnace). A margin separator is applied around the margin area of the abutment tooth (foundation) 13. Margin porcelain having desired color is selected on the zirconium oxide ceramic framework 11. To the selected Margin porcelain, distilled water or VINTAGE CPM modeling liquid (manufactured by Shofu) is added and the mixture is kneaded to form a cream, which is then built up on the margin area. The build-up is allowed to condense on the abutment tooth (foundation) 13 to remove water and then baked (Specifically, starting at 650°C, the build-up is heated to 960°C to 1,050°C in vacuo (1.3kPa to 8.0kPa), maintained at the temperature for 0 to 60 seconds and then cooled outside the furnace). Subsequently, Opaque Liner porcelain having desired color is selected on the surface of the zirconium oxide ceramic framework 11 containing Margin porcelain. The selected Opaque Liner porcelain is thinly applied to the surface and baked (Specifically, starting at 450°C to 500°C, the applied Opaque Liner porcelain is heated to 920°C to 940°C in vacuo (1.3kPa to 8.0kPa), maintained at the temperature for 30 to 60 seconds and then cooled outside the furnace). Body porcelain and Cervical porcelain having desired color are then selected on the zirconium oxide ceramic framework 11 having Opaque Liner porcelain baked onto it. To the selected porcelains, distilled water or VINTAGE modeling liquid (manufactured by Shofu) is added and the mixture is kneaded to form a cream, which is then built up to form a tooth shape. The build-up is allowed to condense to remove water and then baked (Specifically, starting at 650°C, the build-up is heated to 900°C to 920°C in vacuo (1.3kPa to 8.0kPa), maintained at the temperature for 30 to 60 seconds and then cooled outside the furnace). After morphological correction, the baked product is washed with water, dried and baked for self-glazing (Specifically, starting at 650°C, the product is heated to 900°C to 920°C in the atmosphere, maintained at the temperature for 0 to 30 seconds and then cooled outside the furnace). When the correction of any missing part is necessary after morphological correction, a cream formed by kneading Collection porcelain with water or VINTAGE modeling liquid (manufactured by Shofu) is further applied as necessary. The applied Collection porcelain is baked (Specifically, starting at 650°C, the applied Collection porcelain is heated to 860°C to 880°C in vacuo (1.3kPa to 8.0kPa), maintained at the temperature for 30 to 60 seconds and then cooled outside the furnace) and finished by polishing. When the correction of any missing part is necessary after self-glazing, a cream formed by kneading Collection porcelain with water or VINTAGE modeling liquid (manufactured by Shofu) is further applied as necessary. The applied Collection porcelain is baked (Specifically, starting at 650°C, the applied Collection porcelain is heated to 860°C to 880°C in vacuo (1.3kPa to 8.0kPa), maintained at the temperature for 30 to 60 seconds and then cooled outside the furnace).

### Examples

### Experiment Example

In this experiment, porcelain is baked onto the surface of a zirconium oxide ceramic (zirconia) and its effect on the bonding of a dental adhesive (resin cement) to the zirconia was examined. The experiment was conducted in the following manner.

The following two samples were prepared: one formed of Yttria-stabilized tetragonal zirconia polycrystal (Y-TZP) (CERCON base manufactured by Dentsply Sankin. The sample is referred to as "Zirconia (CERCON)," hereinafter) and the other formed of Zirconia (CERCON) and a dedicated porcelain (CERCON CERAM S manufactured by Dentsply-Sankin) baked onto the surface of Zirconia (CERCON) (The sample is referred to as "Zirconia + CERCON CERAM," hereinafter).

CERCON base is composed of zirconium dioxide, yttrium trioxide and hafnium dioxide.

Zirconia (CERCON) was prepared by abrading its surface with #600 waterproof abrasive paper and sand-blasting the surface. A strip of double-sided adhesive tape having a 4mm hole (in diameter) was applied to the prepared surface to define a bonding surface.

Zirconia + CERCON CERAM was prepared by abrading a surface of Zirconia with #600 waterproof abrasive paper, baking CERCON CERAM onto the surface, and sand-blasting the CERCON CERAM-applied surface. A strip of double-sided adhesive tape having a 4mm hole (in diameter) was applied to the prepared surface to define a bonding surface.

Panavia Fluoro Cement (PF, manufactured by Kuraray Medical) and Super-Bond C&B (SB, manufactured by Sun Medical) were used as dental adhesives.

Prior to the application of the dental adhesives, the bonding surface defined by the double-sided tape was silane-coupling-treated. Specifically, Mega Bond primer and Porcelain Bond Activator were used as silane-coupling agents when the dental adhesive was Panavia Fluoro Cement while Porcelain Liner M was used as a silane coupling agent when the dental adhesive was Super-Bond C&B.

A stainless rod for tensile test was set up. Each sample was submerged in water at 37°C and was subsequently analyzed for the tensile bonding strength by a universal testing machine (AUTOGRAPH AG500B manufactured by Shimadzu) operated at a crosshead speed of 1mm/min. The results were analyzed by 3-way ANOVA and Dunnett's T3 test at a significance level of 5%. Furthermore, the morphology of fractured surfaces was observed and tested using Mann-Whitney U-test at a significance level of 1%. The results revealed that whether the bonding surface is porcelain or Zirconia, interfacial failure was the most frequent type of fracture, followed by mixed failure of interfacial failure and cohesive failure of the adhesive resin cement. No failure was observed between Zirconia and the second porcelain layer 14.

The results of the tensile bonding test are shown in Fig. 3. As shown, the bonding strength was higher in Zirconia + CERCON CERAM than in Zirconia (CERCON) for both of the dental adhesives.

Thus, it has been proven that baking the dedicated porcelain onto the surface of zirconium oxide ceramic (zirconia) improves the bonding strength of zirconia to dental adhesives (resin cements).

### Industrial Applicability

Having improved conformity and bonding to an abutment tooth (foundation), the dental restoration of the present invention makes it possible to expand the application of all-ceramic restorations, the technique that has been used only with a single tooth thus far, to multiple teeth (bridges).

## Claims

1. A dental restoration, comprising:
a high-strength ceramic framework; and
a porcelain layer deposited at least on the inner surface of the ceramic framework for being bonded by a dental adhesive to the outer surface of an abutment tooth in the mouth.

2. The dental restoration according to claim 1, wherein the high-strength ceramic framework comprises a zirconium oxide ceramic.

3. The dental restoration according to claim 1 or 2, wherein the porcelain layer comprises a material that can be baked onto the ceramic framework.

4. The dental restoration according to any of claims 1 to 3, wherein the porcelain layer comprises an inorganic oxide.

5. The dental restoration according to any of claims 1 to 4, wherein the porcelain layer comprises at least one of SiO₂, Al₂O₃, ZrO₂, TiO₂ and SnO₂.

6. The dental restoration according to any of claims 1 to 5, wherein the porcelain layer is composed primarily of aluminosilicate glass.

7. The dental restoration according to any of claims 1 to 6, wherein the bonding surface of the porcelain layer to be bonded to the dental adhesive is silane-coupling-treated.

8. The dental restoration according to any of claims 1 to 7, wherein the porcelain layer is adapted to be bonded to the abutment tooth by the dental adhesive at a bonding strength of 15MPa or higher.

9. The dental restoration according to any of claims 1 to 8, further including another porcelain layer deposited on the outer surface of the ceramic framework.

10. A method for producing a dental restoration for being bonded by a dental adhesive to the outer surface of an abutment tooth in the mouth, the method comprising:
forming a ceramic framework having an inner surface conforming to the abutment tooth, and;
applying and baking a porcelain paste onto the inner surface of the ceramic framework.

11. The method according to claim 10, further comprising silane-coupling-treating the bonding surface of the porcelain layer to be bonded to the dental adhesive.

12. The method according to claim 10 or 11, wherein a fire-resistant model is inserted into the inner surface of the porcelain paste during the baking step subsequent to the application of the porcelain paste.

13. The method according to any of claims 10 to 12, further comprising applying and baking a porcelain paste onto the outer surface of the ceramic framework.

14. The method according to claim 13, wherein the particles forming the material of the porcelain paste to be applied and baked onto the inner surface of the ceramic framework have smaller particle size than the particles forming the material of the porcelain paste to be applied and baked onto the outer surface of the ceramic framework.

15. The method according to claim 13 or 14, wherein the porcelain paste to be applied and baked onto the inner surface of the ceramic framework has a fluidity comparable to or higher than that of the porcelain paste applied and baked onto the outer surface of the ceramic framework.

16. A porcelain paste for a dental restoration for being applied to a surface of the dental restoration to deposit a porcelain layer on the surface, the porcelain paste being formed primarily of aluminosilicate glass.

17. The porcelain paste according to claim 16, wherein the surface to which the porcelain paste is applied comprises the inner surface of a ceramic framework.
